## Europäisches Patentamt
## European Patent Office
## Office européen des brevets

(19)

(11) Numéro de publication: **0 040 118**
A2

(12)
# DEMANDE DE BREVET EUROPEEN

(21) Numéro de dépôt: **81400606.0**

(22) Date de dépôt: **15.04.81**

(51) Int. Cl.³: **C 04 B 35/40**
**H 01 F 1/34**

(30) Priorité: **14.05.80 FR 8010844**

(43) Date de publication de la demande:
**18.11.81 Bulletin 81/46**

(84) Etats contractants désignés:
**DE GB IT NL SE**

(71) Demandeur: **THOMSON-CSF**
**173, Boulevard Haussmann**
**F-75360 Paris Cedex 08(FR)**

(72) Inventeur: **Lefebvre, Dominique**
**THOMSON CSF, SCPI 173, bld Haussmann**
**F-75360 Paris Cedex 08(FR)**

(72) Inventeur: **Simonet, William**
**THOMSON CSF, SCPI 173, bld Haussmann**
**F-75360 Paris Cedex 08(FR)**

(74) Mandataire: **Giraud, Pierre et al,**
**"THOMSON-CSF" - SCPI 173, bld Haussmann**
**F-75360 Paris Cedex 08(FR)**

(54) **Matériau ferrimagnétique à grande stabilité thermique et à faible largeur de raie de gyrorésonance utilisable en très haute fréquence.**

(57) L'invention a pour but d'obtenir un matériau d'aimantation prédéterminée présentant un compromis acceptable entre les valeurs du coefficient de variation thermique de l'aimantation et de la largeur de la raie de gyrorésonance.

Le matériau selon l'invention est un grenat d'yttrium substitué au calcium, vanadium, et à l'indium (ou au zirconium) de formule:

$$Y_{3-2x-z-u}Ca_{2x+u} Gd_z Fe_{5-x-y-u} V_x In_y Zr_u O_{12}$$

avec:

$0 \leq x \leq 0,6$

$0,4 \leq y \leq 0,6$ et $u = 0$ ou bien $0,2 \leq u \leq 0,6$ avec $y = 0$ et $0,5 \leq z \leq 2$.

Application aux dispositifs de télécommunications à très haute fréquence (quelques centaines à quelques milliers de mégahertz).

FIG.1

MATERIAU FERRIMAGNETIQUE A GRANDE STABILITE THERMIQUE
ET A FAIBLE LARGEUR DE RAIE DE GYRORESONANCE UTILISABLE
EN TRES HAUTE FREQUENCE

L'invention concerne un matériau ferrimagnétique particulièrement bien adapté à l'utilisation en hyperfréquence (quelques centaines à quelques milliers de mégahertz).

Les matériaux les plus utilisés actuellement dans la fabrication des dispositifs hyperfréquences sont dérivés du grenat d'yttrium, les deux plus grandes familles ayant été jusqu'à présent les grenats d'yttrium substitués à l'aluminium et les grenats substitués au gadolinium-aluminium.

Pour un moment magnétique donné (que l'on se fixe en fonction de la fréquence d'utilisation) les utilisateurs prennent notamment en considération les facteurs suivants :

- les caractéristiques diélectriques ;
- la stabilité de l'aimantation en fonction de la température ;
- la valeur de la largeur de raie de gyrorésonance ;
- la valeur de la largeur de raie effective.

La recherche des valeurs optimales conduit souvent à des exigences contradictoires. Par exemple la stabilité thermique des grenats d'yttrium-fer n'est généralement obtenue (grâce à la substitution de gadolinium à l'yttrium) qu'au prix d'un élargissement de la largeur de raie de gyrorésonance.

L'invention concerne un matériau assurant un excellent compromis notamment entre stabilité de l'aimantation et largeur de raie de gyrorésonance. En outre le matériau a de très faibles pertes diélectriques aux fréquences d'utilisation ce qui permet d'obtenir de très faibles pertes d'insertion d'origine diélectrique pour un dispositif de transmission tel qu'un circulateur.

Le matériau selon l'invention est un grenat de formule générale :

$$Y_{3-2x-z-u} \; Ca_{2x+u} \; Gd_z \; Fe_{5-u-x-y} \; V_x \; In_y \; Zr_u \; O_{12}$$

dans laquelle on a les relations suivantes entre les paramètres x, y, u et z :

$$0 \leq x \leq 0,6$$
$$0,4 \leq y \leq 0,6$$
$$0,2 \leq u \leq 0,6$$

u étant nul si y ne l'est pas, et inversement,

et $0,5 \leq z \leq 2$.

On notera que les matériaux de formule analogue dans lesquels on aurait à la fois de l'indium et du zirconium présentent des propriétés très voisines, bien qu'en pratique il soit inutile, pour atteindre le but recherché, d'ajouter en même temps de l'indium et du zirconium.

Les matériaux sont obtenus de la manière suivante :

On choisit des matières premières de pureté voisine de 99,5% (oxyde d'yttrium, carbonate de calcium, oxyde de fer, oxyde de gadolinium, oxyde d'indium ou de zirconium et oxyde de vanadium). Ces matières premières sont pesées selon le dosage prévu par la formule générale, dans laquelle on introduit un défaut de fer pour tenir compte de l'apport de fer consécutif aux deux broyages prévus dans le cycle de préparation. La valeur de ce défaut est variable selon le taux des différentes matières premières, elle est comprise entre 0,175 et 0,245 en moles. Lors des pesées on tient également compte des pertes au feu des différentes matières premières. Le mélange ainsi dosé est alors broyé en milieu liquide, séché puis tamisé. La poudre obtenue est ensuite "chamottée", c'est à dire traitée thermiquement à une température comprise entre 1000 et 1200°C pendant 4 heures. Le produit est à nouveau broyé, séché et tamisé, des agents liants et lubrifiants pouvant être apportés au cours de ces étapes. On procède ensuite à un compactage de la poudre sous une pression d'environ 1,6 tonne par cm$^2$ pour former des échantillons qui subissent ensuite un traitement thermique sous oxygène à une température dite de frittage comprise entre 1250 et 1450°C.

Définition des notations :

Dans ce qui suit on désigne par :

$-M_S$ l'aimantation à saturation en kA/m, mesurée à la température ambiante (voisine de 20°C) ;

$-\varepsilon'$ la partie réelle de la constante diélectrique ;

- tg $\delta_\epsilon$ la tangente de l'angle de pertes diélectriques mesurée à la fréquence de 8,2 GHz sur un barreau d'environ 1mm de diamètre ;

- $g_{eff}$ le facteur gyromagnétique effectif ;

- $\Delta H$ en kA/m la largeur de raie de résonance gyromagnétique mesurée à 9,5 GHz sur une sphère d'environ 1 mm de diamètre ;

- $\Delta H_{eff}$ en kA/m la largeur effective, elle caractérise les pertes résiduelles magnétiques hors résonance ;

- $\alpha(t_A, t_B)$ le coefficient de température de $M_S$ entre les températures $t_A$ et $t_B$, défini par la formule :

$$\alpha (t_A, t_B) = \frac{1}{t_B - t_A} \; \frac{Ms_{max} - Ms_{min}}{M_s}$$

dans laquelle $Ms_{max}$ désigne la valeur maximale de l'aimantation dans l'intervalle $(t_A, t_B)$ et $Ms_{min}$ la valeur minimale de l'aimantation dans le même intervalle, $M_S$ étant la valeur à la température ambiante (20°C) ;

- $T_c$ la température de Curie exprimée en degrés Celsius.

D'autres caractéristiques de l'invention ressortiront des exemples qui suivent, donnés à titre non limitatif et illustrés par les figures annexées parmi lesquelles :

Les figures 1 à 4 représentent la variation du moment magnétique en fonction de la température pour différents échantillons de matériau selon l'invention.

La figure 5 est un diagramme explicatif.

Première série d'exemples :

On a choisi u=0 (absence de zirconium). Les valeurs des paramètres x, y et z sont choisies dans les intervalles :

$$0 \leq x \leq 0,5$$
$$0,4 \leq y \leq 0,5$$
$$0,5 \leq z \leq 2,0.$$

Le tableau I donne les caractéristiques obtenus pour différents matériaux :

## TABLEAU I

| Exemple N° | x | y | z | $M_s$ KA/m | $\Delta H$ KA/m | $\alpha(-40,80°C)$ $.10^{+3}/°C$ | $T_c$ °C |
|---|---|---|---|---|---|---|---|
| 1 | 0 | 0,5 | 0,9 | 120,5 | 0,9 | 3 | 182 |
| 2 | 0,5 | 0,5 | 0,5 | 78 | 1,1 | 3,9 | 157 |
| 3 | 0,5 | 0,5 | 1 | 70 | 1,6 | 3,2 | 159 |
| 4 | 0,3 | 0,5 | 1,5 | 74 | 2,1 | 2 | 174 |
| 5 | 0,2 | 0,5 | 1,8 | 70,5 | 4,1 | 1,9 | 178 |
| 6 | 0,38 | 0,5 | 1,5 | 66 | 2,1 | 2,3 | 168 |
| 7 | 0,25 | 0,5 | 2,0 | 62,9 | 4,7 | 1,9 | 174 |
| 8 | 0,5 | 0,5 | 1,5 | 56,5 | 2,5 | 2,4 | 161 |
| 9 | 0,5 | 0,5 | 1,8 | 48,3 | 3,4 | 1,6 | 163 |
| 10 | 0,4 | 0,4 | 2,0 | 47,5 | 6,3 | 0,7 | 199 |
| 11 | 0,5 | 0,5 | 2,0 | 43,7 | 4,3 | 0,9 | 164 |
| 12 | 0,5 | 0,4 | 2,0 | 39,9 | 7,9 | 1,2 | 195 |

On constate que dans l'ensemble on a :

$$39 \leq M_S \leq 121$$
$$0,9 \leq \Delta H \leq 7,9.$$

5

L'exemple N°4 représente un excellent compromis, pour la valeur de $M_S$ de 74 KA/m.

Deuxième série d'exemples :

On a choisi y=0 (absence d'indium). Les valeurs des paramètres x, u et z sont choisies dans les intervalles :

$$0 \leq x \leq 0,5$$
$$0,23 \leq u \leq 0,5$$
$$0,5 \leq z \leq 2.$$

Le tableau II donne les caractéristiques obtenus pour différents matériaux :

## TABLEAU II

| Exemple N° | x | u | z | $M_S$ KA/m | $\Delta H$ KA/m | $\alpha$ (-40,80°C) $.10^{+3}/°C$ | $T_c$ °C |
|---|---|---|---|---|---|---|---|
| 13 | 0 | 0,5 | 0,9 | 120,5 | 0,9 | 3 | 182 |
| 14 | 0,1 | 0,4 | 1,5 | 91 | 1,7 | 1,9 | 202 |
| 15 | 0,5 | 0,5 | 0,5 | 77,2 | 2,1 | 3,2 | 160 |
| 16 | 0,3 | 0,5 | 1,5 | 71,8 | 2,1 | 2,5 | 163 |
| 17 | 0,2 | 0,5 | 1,8 | 73,8 | 1,9 | 2 | 173 |
| 18 | 0,25 | 0,4 | 1,5 | 74,8 | 2,4 | 1,8 | 195 |
| 19 | 0,13 | 0,23 | 1,5 | 71,3 | 3,6 | 1 | 239 |
| 20 | 0,25 | 0,5 | 2 | 63,7 | 3,5 | 1,7 | 171 |
| 21 | 0,5 | 0,5 | 1 | 65,7 | 2,5 | 3,2 | 160 |
| 22 | 0,5 | 0,5 | 1,5 | 53,7 | 3,5 | 2,3 | 160 |

On constate que dans l'ensemble on a :

$$53 \leq M_S \leq 121$$
$$0,9 \leq \Delta H \leq 3,6$$
$$1.10^{-3} \leq \alpha \leq 3,2.10^{-3}.$$

L'exemple N° 14 représente un excellent compromis pour $M_S = 91$ KA/m.

L'expérience acquise en fabriquant les différents échantillons de matériaux cités dans les tableaux I et II conduit à formuler les règles suivantes :

1°) Les matériaux ayant une aimantation comprise entre 96 KA/m et 80 KA/m et des valeurs acceptables pour H et sont situés dans le domaine :

$$0 \leq x \leq 0,2$$
$$0,4 \leq y \text{ (ou u)} \leq 0,6$$
$$1,3 \leq z \leq 1,7$$

2°) Les matériaux ayant une aimantation comprise entre 80 KA/m et 72 KA/m et des valeurs acceptables pour H et sont situés dans le domaine :

$$0,1 \leq x \leq 0,3$$
$$0,4 \leq y \text{ (ou u)} \leq 0,6$$
$$1,4 \leq z \leq 1,9$$

Les matériaux ayant une aimantation comprise entre 72 KA/m et 50 KA/m et des valeurs acceptables pour H et sont situés dans le domaine :

$$0,3 \leq x \leq 0,6$$
$$0,4 \leq y \text{ (ou u)} \leq 0,6$$
$$0,9 \leq z \leq 1,6$$

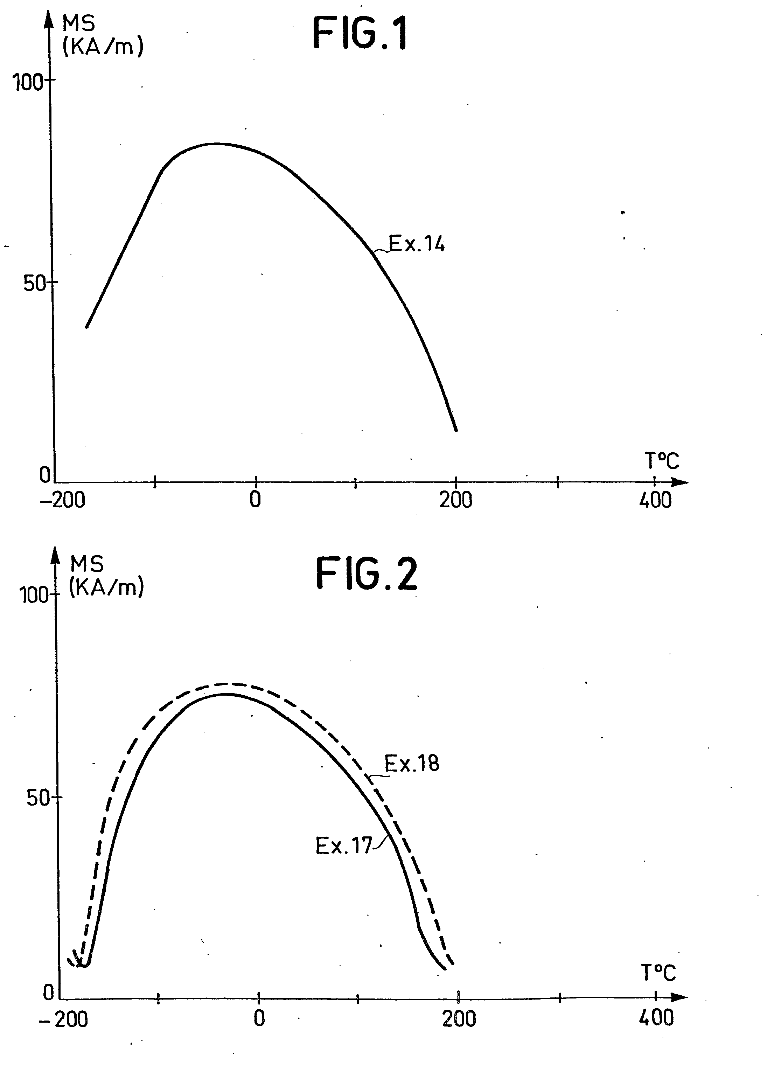

La figure 1 donne la courbe de variation de $M_S$ en fonction de la température pour le matériau de l'exemple N°4.

La température est :

$T_C = 202°C.$

Les figures 2 à 4 donnent des renseignements analogues pour les matériaux des exemples :

17 : $T_C = 173°C$ (fig. 2)

18 : $T_C = 195°C$ (fig. 2)

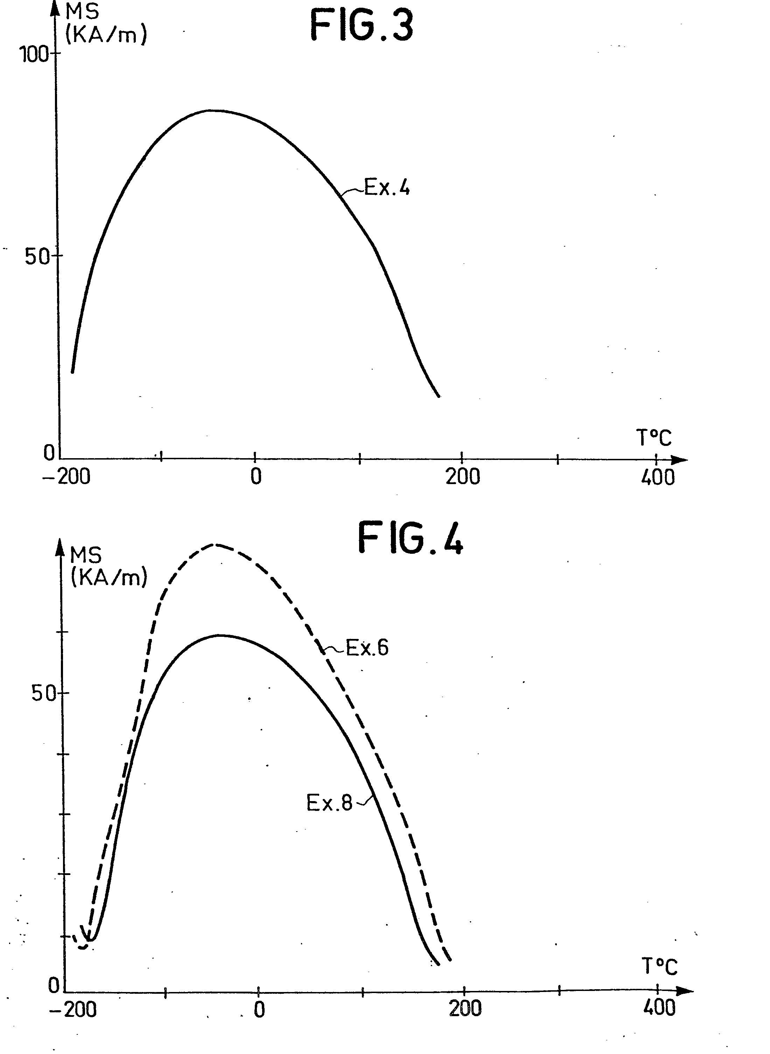

4 : $T_C = 174°C$ (fig.3)

8 : $T_C = 161°C$ (fig. 4)

6 : $T_C = 168°C$ (fig.4).

8

En ce qui concerne les pertes diélectriques, celles-ci sont minimales quand on évite l'excès de fer. On a signalé plus haut que, lors de la fabrication du matériau, on doit introduire une quantité moindre de fer par rapport à la formule théorique du matériau final. Ce défaut $\varepsilon$ correspond à la formule modifiée comme suit :

$$Y_{3-2x-z-u} \, Ca_{2x+u} \, Gd_z \, Fe_{5-u-x-y-\varepsilon} \, V_x \, In_y \, Zr_u \, O_{12}.$$

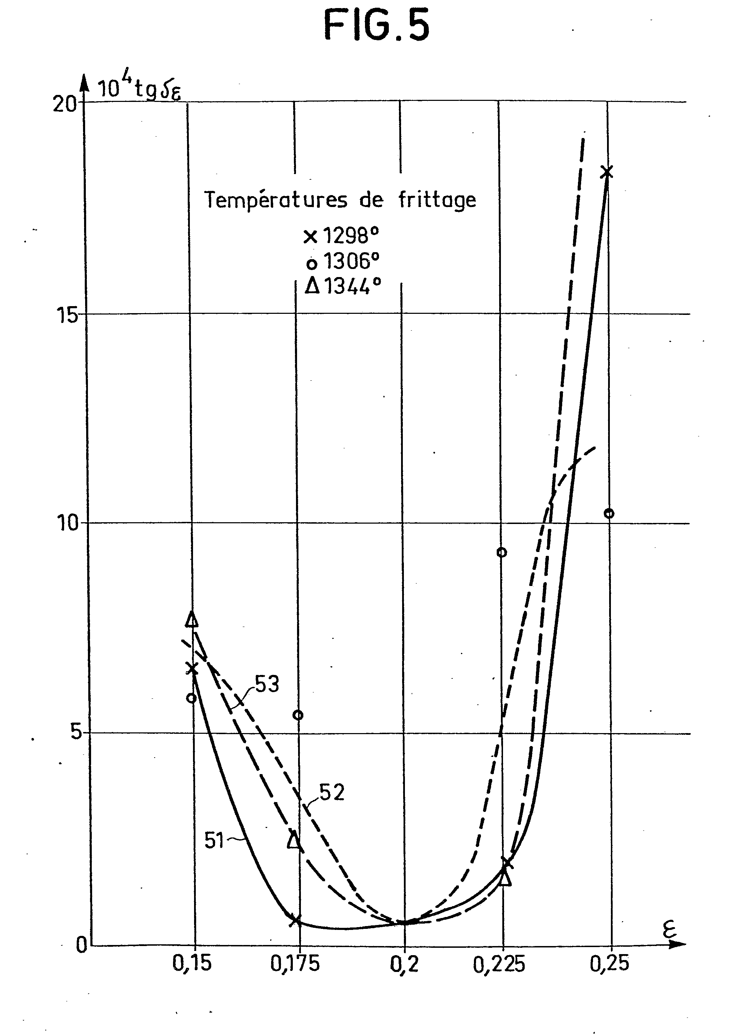

La figure 5 donne les courbes des pertes diélectriques exprimées par $tg\delta_\varepsilon$ pour différentes valeurs de $\varepsilon$ et différentes températures de frittage (voir les symboles des points figuratifs). Le matériau étudié est celui de la formule dans lequel on a :

$$x = 0,5$$
$$y = 0,5$$
$$z = 1,5.$$

REVENDICATIONS

1. Matériau ferrimagnétique à structure grenat, caractérisé en ce qu'il répond à la formule chimique générale :

$$Y_{3-2x-z-u} Ca_{2x+u} Gd_z Fe_{5-x-y-u} V_x In_y Zr_u O_{12}$$

dans laquelle on a les relations suivantes entre les paramètres x, y, z et u :

$$0 \leq x \leq 0,6$$
$$0,4 \leq y \leq 0,6$$
$$0,2 \leq u \leq 0,6$$

u étant nul si y ne l'est pas et inversement

et $0,5 \leq z \leq 2$.

2. Matériau suivant la revendication 1, caractérisé en ce que :

$$0 \leq x \leq 0,5$$
$$0,4 \leq y \leq 0,5$$
$$0,5 \leq z \leq 2,0$$

et u = 0.

3. Matériau suivant la revendication 1, caractérisé en ce que :

$$0 \leq x \leq 0,5$$
$$0,23 < u \leq 0,5$$
$$0,5 \leq z \leq 2,0$$

et y=0.

4. Matériau suivant la revendication 1, caractérisé en ce que, dans le but d'obtenir une aimantation comprise entre 96 KA/m et 80 KA/m, on a les relations suivantes :

$$0 \leq x \leq 0,2$$
$$0,4 \leq y \text{ (ou u)} \leq 0,6$$
$$1,3 \leq z \leq 1,7.$$

5. Matériau suivant la revendication 1, caractérisé en ce que, dans le but d'obtenir une aimantation comprise entre 80 KA/m et 72 KA/m, on a les relations suivantes :

$$0,1 \leq x \leq 0,3$$
$$0,4 \leq y \text{ (ou u)} \leq 0,6$$
$$1,4 \leq z \leq 1,9.$$

6. Matériau suivant la revendication 1, caractérisé en ce que, dans le but d'obtenir une aimantation comprise entre 72 KA/m et 50 KA/m on a les relations suivantes :

$$0{,}3 \leq x \leq 0{,}6$$
$$0{,}4 \leq y \ (ou \ u) \leq 0{,}6$$
$$0{,}9 \leq z \leq 1{,}6.$$

1/3

FIG.1

FIG.2

0040118

# FIG.3

# FIG.4

3/3

FIG.5